# EUROPEAN PATENT APPLICATION

(11) **EP 4 851 919 A1**
(43) Date of publication of application: **09.12.2026**
(21) Application number: 26179746.8
(22) Date of filing: 20.05.2026
(51) Int. Cl.: G06T 7/50

(54) **METHOD AND APPARATUS FOR SINGLE IMAGE DEPTH ESTIMATION**

(30) Priority: 04.06.2025 US 202519228359
(71) Applicant: HERE Global B.V., 5611 ZT Eindhoven (NL)
(72) Inventor: DSILVA, Godson Michael, Naigaon (West) (IN); BHOIR, Amit Ankush, Saphale (East) (IN); DAS, Suvendu Kumar, Navi Mumbai (IN); BHARADI, Vinayak Ashok, Ratnagiri (IN)
(74) Representative: Cohausz & Florack

(57) **Abstract**

An approach is provided for single image depth estimation. The approach involves, for instance, processing first training imagery using depth-estimation models to generate a first set of predicted depth maps. The approach also involves training a depth fusion model to learn one or more depth features from an input comprising the first plurality of predicted depth maps and to predict a fused depth map based on the input. The approach further involves processing second training imagery using the depth-estimation models to generate a second set of predicted depth maps. The approach further involves processing the second set of predicted depth maps using the trained depth fusion model to generate the fused depth map. The approach further involves storing the fused depth map as ground truth data for the second training imagery.

## Description

### BACKGROUND

Street-level imagery (SLI) is often used for creating and maintaining accurate map data. However, extracting reliable metric depth information from monocular imagery presents significant technical challenges due to the general absence of direct depth measurements and the variability in camera intrinsics across different SLI data vendors and devices. Traditional methods that rely on supervised learning using high-accuracy data from specialized sensors like LiDAR often suffer from poor generalization when applied to the diverse and unconstrained domain of dashcam imagery due to sensor disparities and a lack of data diversity in the training sets. This inaccuracy in depth estimation directly impacts the positioning accuracy of features on maps, hindering the integration of dashcam-sourced data into automated map creation pipelines, where specific accuracy thresholds often are required. Therefore, a need exists for a robust and adaptable monocular depth estimation technique that can overcome the limitations of ground truth scarcity and varying camera parameters to accurately estimate metric depth from dashcam SLI.

### SOME EXAMPLE EMBODIMENTS

Therefore, there is a need for a robust and adaptable monocular depth estimation technique that can overcome the limitations of ground truth scarcity and varying camera parameters/intrinsics to accurately estimate metric depth from monocular imagery (e.g., a single monocular image).

According to one embodiment, a method comprises processing first training imagery using a plurality of depth-estimation models to generate a first plurality of predicted depth maps. The first training imagery is associated with first ground truth data comprising a plurality of ground truth depth maps. The method also comprises initiating a training of a depth fusion model to learn one or more depth features from an input comprising the first plurality of predicted depth maps and to predict a fused depth map based on the input. By way of example, the depth fusion model is based on transformer encoder network with a self-attention mechanism. A loss for the training is calculated using the fused depth map and the first plurality of ground truth depth maps. The training adjusts the one or more depth features based on the loss. The method further comprises processing second training imagery using the plurality of depth-estimation models to generate a second plurality of predicted depth maps. The method further comprises processing the second plurality of predicted depth maps using the trained depth fusion model to generate the fused depth map. The method further comprises storing the fused depth map as ground truth data for the second training imagery. In one embodiment, the method further comprises initiating a training of a single-image depth-estimation model based on the second training imagery and the ground truth data.

According to another embodiment, an apparatus comprises at least one processor, and at least one memory including computer program code for one or more computer programs, the at least one memory and the computer program code configured to, with the at least one processor, cause, at least in part, the apparatus to process first training imagery using a plurality of depth-estimation models to generate a first plurality of predicted depth maps. The first training imagery is associated with first ground truth data comprising a plurality of ground truth depth maps. The apparatus is also caused to initiate a training of a depth fusion model to learn one or more depth features from an input comprising the first plurality of predicted depth maps and to predict a fused depth map based on the input. By way of example, the depth fusion model is based on transformer encoder network with a self-attention mechanism. A loss for the training is calculated using the fused depth map and the first plurality of ground truth depth maps. The training adjusts the one or more depth features based on the loss. The apparatus is further caused to process second training imagery using the plurality of depth-estimation models to generate a second plurality of predicted depth maps. The apparatus is further caused to process the second plurality of predicted depth maps using the trained depth fusion model to generate the fused depth map. The apparatus is further caused to store the fused depth map as ground truth data for the second training imagery. In one embodiment, the apparatus is further caused to initiate a training of a single-image depth-estimation model based on the second training imagery and the ground truth data.

According to another embodiment, a computer-readable storage medium carries one or more sequences of one or more instructions which, when executed by one or more processors, cause, at least in part, an apparatus to process first training imagery using a plurality of depth-estimation models to generate a first plurality of predicted depth maps. The first training imagery is associated with first ground truth data comprising a plurality of ground truth depth maps. The apparatus is also caused to initiate a training of a depth fusion model to learn one or more depth features from an input comprising the first plurality of predicted depth maps and to predict a fused depth map based on the input. By way of example, the depth fusion model is based on transformer encoder network with a self-attention mechanism. A loss for the training is calculated using the fused depth map and the first plurality of ground truth depth maps. The training adjusts the one or more depth features based on the loss. The apparatus is further caused to process second training imagery using the plurality of depth-estimation models to generate a second plurality of predicted depth maps. The apparatus is further caused to process the second plurality of predicted depth maps using the trained depth fusion model to generate the fused depth map. The apparatus is further caused to store the fused depth map as ground truth data for the second training imagery. In one embodiment, the apparatus is further caused to initiate a training of a single-image depth-estimation model based on the second training imagery and the ground truth data.

According to another embodiment, an apparatus comprises means for processing first training imagery using a plurality of depth-estimation models to generate a first plurality of predicted depth maps. The first training imagery is associated with first ground truth data comprising a plurality of ground truth depth maps. The method also comprises initiating a training of a depth fusion model to learn one or more depth features from an input comprising the first plurality of predicted depth maps and to predict a fused depth map based on the input. A loss for the training is calculated using the fused depth map and the first plurality of ground truth depth maps. The training adjusts the one or more depth features based on the loss.. The method further comprises processing second training imagery using the plurality of depth-estimation models to generate a second plurality of predicted depth maps. The method further comprises processing the second plurality of predicted depth maps using the trained depth fusion model to generate the fused depth map. The method further comprises storing the fused depth map as ground truth data for the second training imagery. In one embodiment, the method further comprises initiating a training of a single-image depth-estimation model based on the second training imagery and the ground truth data.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing single-image depth estimation, according to one example embodiment;
FIG. 2 is a diagram of an architecture of the dashcam observation extraction service, according to one example embodiment;
FIG. 3 is a diagram of a feature detection component capable of single image depth estimation, according to example embodiment;
FIG. 4 is a process flow for conversion to images and depth maps, according to one example embodiment;
FIG. 5 is a process flow for parameter tuning of a depth fusion model for single image depth estimation, according to one example embodiment;
FIG. 6 is a process flow for pseudo depth map estimation, according to one example embodiment;
FIG. 7 is a process flow for pre-text model training, according to one example embodiment;
FIG. 8 is a process flow for downstream model training, according to one example embodiment;
FIG. 9 is a process flow for model inference, according to one example embodiment;
FIG. 10 is a diagram of a geographic database, according to one embodiment;
FIG. 11 is a diagram of hardware that can be used to implement an embodiment;
FIG. 12 is a diagram of a chip set that can be used to implement an embodiment; and
FIG. 13 is a diagram of a mobile terminal that can be used to implement an embodiment.

### DESCRIPTION OF SOME EMBODIMENTS

Examples of a method, apparatus, and computer program for single-image depth estimation are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such can also "one embodiment" is used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

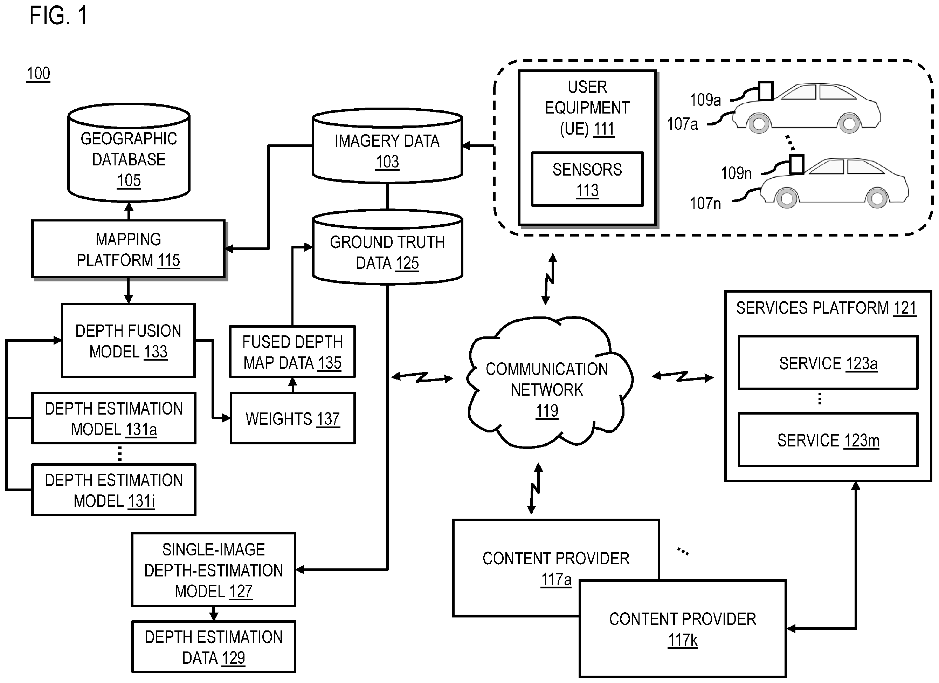

FIG. 1 is a diagram of a system 100 capable of providing single-image depth estimation 101, according to one example embodiment. Street-level imagery (SLI) (e.g., imagery data 103) has emerged as an important data source for the creation and maintenance of digital maps (e.g., digital map data of a geographic database 105). As used herein, SLI refers images and videos captured at ground level, typically along streets and roads, using various collection methods such as but not limited to specialized vehicles (e.g., vehicles 107a-107n - also collectively referred to as vehicles 107), dashcams (e.g., dashcams 109a-109n - also collectively referred to as dashcams 109), and mobile devices (e.g., user equipment (UE) device 111 equipped with one or more sensors 113). By way of example, this imagery data 103 can be used for creating and maintaining digital maps of the geographic database 105, as it provides detailed visual and positional information about the road environment, including features like road signs, poles, other infrastructure, and/or equivalent. SLI systems may use technologies (e.g., sensors 113) such as but not limited to cameras and/or other related sensors such as but not limited to LiDAR, positioning sensors (e.g., Global Navigation Satellite System (GNSS) receivers), inertial measurement units (IMUs), and/or the like to enhance accuracy and comprehensiveness.

In one embodiment, to construct and update digital map data of the geographic database 105, a mapping platform 115 can use on data from various SLI providers and sources (e.g., content providers 117a-117k - also collectively referred to as content providers 117) over a communication network 119, which were then processed through a series of services of a mapping pipeline, such as data ingestion, extraction, map derivation, road service groups, and publication. In other words, SLI undergoes a multi-stage process starting with data ingestion, where raw visual data in various formats is received and integrated into a geographic reference system to turn the visual data into geographic information (e.g., where the visual data is correlated with geographic locations). Following ingestion is extraction, where machine learning models analyze the imagery to detect and classify features such as road signs and poles, estimate their depth using techniques as described in the various embodiments herein, and track these features across frames, assigning them a feature name. The extracted features, along with their spatial information, are then utilized in map derivation to construct and update digital maps, positioning these features accurately at corresponding geographic locations. A snapshot of the live map, containing the updated information, is created as a unified and consistent base for publication, making the enhanced map content available for various applications (e.g., a services platform 121 and/or one or more services 123a-123m - also collectively referred to as services 123 - of the services platform 121) and/or users (e.g., UEs 111 and/or vehicles 107).

In one embodiment, the system 100 enables the integration of multiple raw data sources of imagery 103. For example, SLI data (e.g., imagery 103) are acquired in a variety of formats and through different collection methods, including but not limited to: (1) Specialized map data collection vehicles: this refers to an internal fleet of cars (e.g., operated by the mapping platform 115 provider) that provides high-precision 360-degree panoramic imagery, LiDAR technology, and 3D positioning information as well as legacy data collection system uses vehicles equipped with first generation hardware and software to collect data such as GPS, images, audio, and inertial measurement unit (IMU) data; and (2) Dashcam: SLI taken from a dashcam 109 or mobile phone (e.g., UE 111).

SLI sources comprising specialized map data collection vehicles mostly have coverage only highways or main arterial roads (e.g., Functional Class (FC) 1 and FC2 roads) because of their limited fleet sizes. In contrast, dashcam SLI sources are crowd sourced (e.g., from consumer vehicles) and have more extensive coverage that extends to all types of roads including to FC3, FC4, and FC5 roads, offering a broader range for constructing more accurate and comprehensive maps. However, the more extensive coverage provided by dashcam SLI data comes with its own set of challenges, including but not limited to non-standardized camera sensor types, inconsistent camera parameters, inconsistent image quality, noisier road geometry, and/or the like.

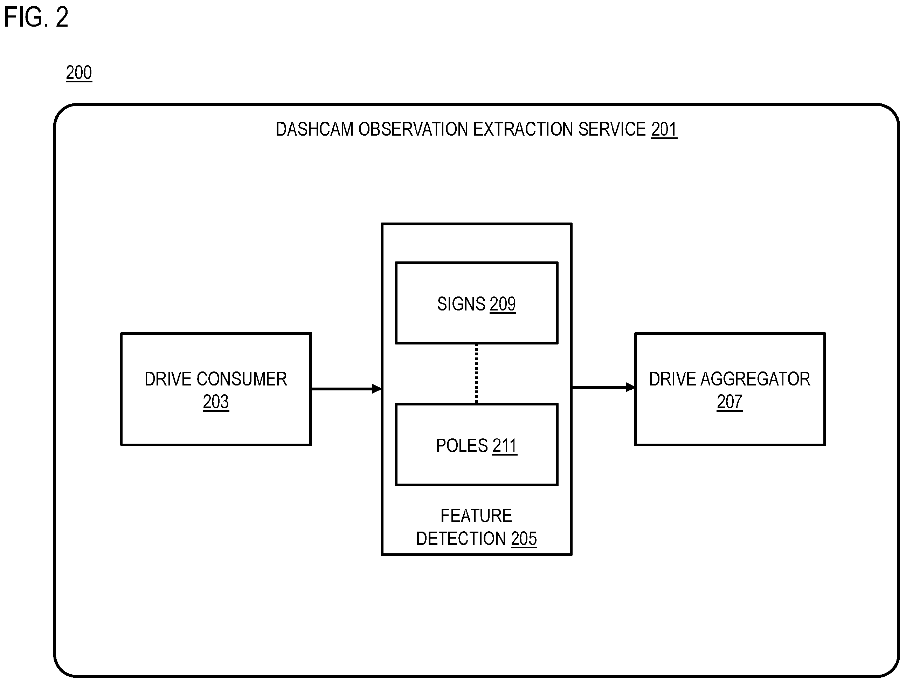

FIG. 2 is a diagram of an architecture 200 of the dashcam observation extraction service 201, according to one example embodiment. The dashcam observation extraction service 201, for instance, is a system designed to process SLI captured from dashcams 109 and UEs 111 to identify, extract, and analyze various features present in the imagery. As shown in FIG. 1, the dashcam observation extraction service 201 comprises a drive consumer component 203 for ingesting SLI captured during individual drives/observations by vehicles 107/UEs 111, a feature detection component 205 for extracting features from the SLI, and a drive aggregator component 207 for aggregating feature extraction results from multiple drives/observations. The feature detection component 205, instance, contains various machine learning (ML) models designed to detect features such as signs 209 and poles 211, to classify the detected features to corresponding geographic feature names, to keep track of predicted region of interest (ROI) corresponding to each detected feature, and to estimate the metric depth of the detected features or individual pixels of the imagery. In summary, the dashcam drives are indexed and then consumed by the service on which the system 100 runs the ML models to extract various features, which are later aggregated and consolidated to be pushed downstream in a designated feature extraction format (FEF). The dashcam observation extraction service 201 generally can process large volumes of SLI observations/drives (e.g., imagery captured during millions of kilometers drives).

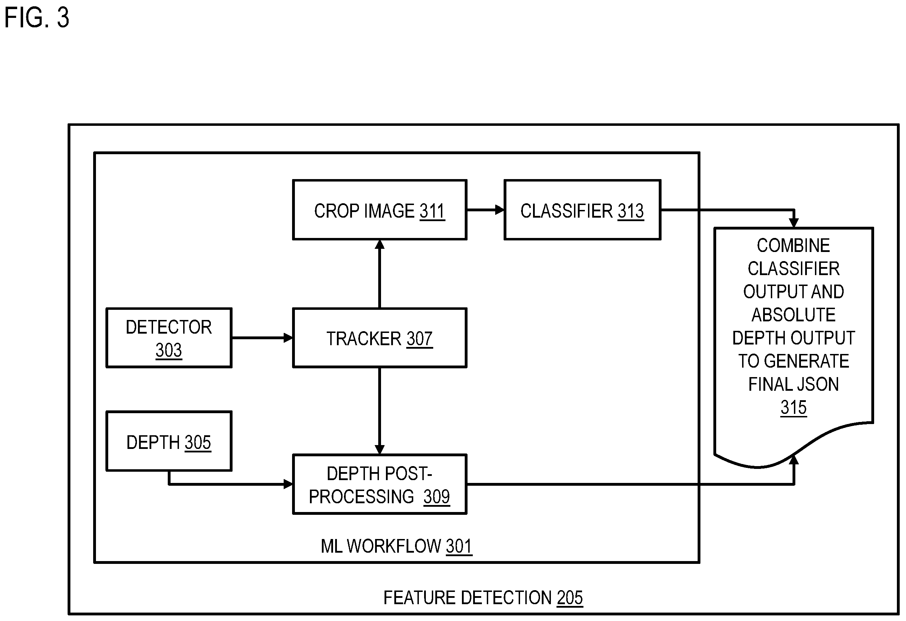

FIG. 3 is a diagram of a feature detection component 205 capable of single image depth estimation, according to example embodiment. More specifically, FIG. 3 illustrates the ML workflow 301 of feature detection component 205 in detail. As shown in FIG. 3, all the drive images (e.g., imagery 103) are first passed through the detector block 303 and the depth block 305. The detector block 303 produces a set of bounding boxes for features such as but not limited to road signs and poles detected in the input imagery. These bounding boxes are passed to the tracker 307 to track the features across different frames. The depth block 305 outputs metric depth maps for the respective drive images. As used herein, the term "metric depth map" are a type of depth map that provides an estimate of the absolute distance to objects in an image. The output from the tracker 307 and depth block 305 are taken as inputs to the depth post-processing logic 309, where the bounding boxes is overlaid on the depth maps, and the associated distances in meters for those features are calculated. The output of the tracker 307 also goes to the crop image block 311 based on the predicted ROI's crop images, which are generated and passed through the classifier 313 to obtain its geographic feature name. The output from the classifier 313 is combined with the output from the depth post-processing logic 309 as combined output 315. In one embodiment, the combined output 315 is created in JSON format (or any other equivalent forma), which is shared downstream.

The various embodiments described herein for single-image depth estimation is related to the depth block 305, which is used in the positioning of features on the map. For any feature positioning, the system 100 considers the variable GPS position, bearing, and lateral position, and computes the feature position based on the estimated depth in meters using the depth-estimation model. The feature position is then used to position the detected feature with its respective group type. If the depth estimation is incorrect/inaccurate, the entire feature-positioning algorithm fails. For example, the system 100 may need to have a sign positioning accuracy of 3 meters or better to provide maps at target levels of accuracy. The various embodiments described herein can be used to achieve this target accuracy using, e.g., single-image monocular depth estimation. Single-image monocular depth estimation refers to the task of predicting the depth information of a scene from a single two-dimensional image (e.g., an RGB image or equivalent), where the input is an image and the output is a depth map with distances in meters for every pixel (e.g., referred to as a metric depth map).

Dashcam-based SLI is considered to be a very good data source that has a vast coverage (e.g., particularly in FC3, FC4, and FC5 roads) as compared to other sources (e.g., SLI from specialized mapping vehicle fleets). To this end, the system 100 faces significant technical challenges with respect to positioning the features detected in SLI on the map to be added to the mapping pipeline. Some major challenges for dashcam-based SLI to perform depth-estimation tasks are as follows:
(1) No Ground Truth Data 125 Available: Obtaining accurate depth measurements often requires specialized equipment, such as depth sensors, LiDAR devices, or stereo camera setups. Unlike specialized mapping vehicles, dashcams 109 and consumer vehicles 107 from which SLI drives/observations (e.g., imagery data 103) are crowd sourced do not have dedicated high quality depth sensors. In addition, SLI from dashcam or consumer sources generally have only monocular based camera setup which captures only perception-based images without any corresponding sensed depth maps that can act as ground truth depth maps. Without accurate ground truth annotations (e.g., ground truth data 125) for depth information, training ML models (e.g., single-image depth-estimation model 127) to estimate metric depths (e.g., to generate depth estimation data 129) becomes technically difficult, leading to potential inaccuracies and limitations in depth prediction.
(2) Varying camera intrinsics: Dashcam-based SLI drive images are collected from different vendors across the globe, where every vendor has its own camera sensor with its own set of camera intrinsics. As used herein, camera intrinsics are a set of parameters that define the internal optical and geometric characteristics of a camera. These parameters are used to understand and compute how a three-dimensional scene is projected onto an two-dimensional image sensor. Knowing the camera intrinsics is essential for tasks such as depth estimation, three-dimensional reconstruction, and accurately localizing objects in the real world. Thus, different cameras with varying intrinsics may capture the same scene differently, leading to metric ambiguity. Estimating metric depth from a single image becomes an ill-posed problem when camera intrinsics are unknown or varied.
(3) Monocular camera setup: Monocular vision poses a more challenging task for obtaining metric depth estimation than stereo pairs owing to the inherent limitations of single-image depth cues. Although stereo pairs provide valuable disparity information from multiple viewpoints for triangulating depth, monocular vision relies solely on cues present in a single image, such as perspective, texture gradient, and object size. The lack of stereo disparities and ambiguity of depth cues in a single image make monocular depth estimation an ill-posed problem, where a single two-dimensional image can correspond to an infinite number of three-dimensional scenes.
(4) Video Sequences with low frames per second (FPS): Video sequences can be used in unsupervised settings when ground truth is not available. However, in dashcam-based SLI drives/observations, video sequences (if available) generally have low FPS, which poses challenges for unsupervised monocular depth estimation owing to the lack of temporal information and motion cues necessary for accurate depth prediction. In scenarios where the FPS is low, the temporal coherence between consecutive frames is limited, leading to difficulties in capturing dynamic scene changes and motion patterns used for depth estimation. This limitation hinders the ability of unsupervised methods to leverage temporal consistency and motion parallax cues for depth inference, resulting in less reliable depth predictions, especially in fast-moving or dynamic scenes.

Conventional approaches to addressing these problems entail images captured by specialized mapping vehicles that are equipped with LiDAR depth sensors to the ground truth depth data for the corresponding images. These conventional approaches operate in a supervised manner, where the input is comprised of the image and the ground truth depth map, and the network is responsible for learning features that enable the production of a depth map that closely aligns with the ground truth. However, these conventional models and approaches may lead to poor generalization of Out of Distribution Data (ODD) or dashcam based images for several reasons:
(1) Sensor Disparity: The conventional model learns the relationships between image features and depth based on the camera parameters (e.g., focal length, sensor size) used during training. If the target images are captured with different cameras, these relationships will not hold true, leading to inaccurate depth estimations.
(2) Metric Ambiguity: Varying camera intrinsics introduces metric ambiguity, where the scale and perspective of objects in the scene differ between the training and target data. This ambiguity can result in depth distortions and inconsistencies in depth predictions.
(3) Overfitting to Training Data: If the model is overfitted to the image dataset captured by specialized mapping vehicles during training, it may memorize specific patterns and features that are unique to those images from specialized mapping vehicles, making it less adaptable to new environments with diverse camera settings.
(4) Limited Data Diversity: Training on a single dataset such as images from specialized mapping vehicles (e.g., which generally have fewer camera variations and more limited imagery) restricts the model's exposure to diverse scenes and camera configurations. This limited data diversity can hinder the model's ability to effectively generalize unseen data during production.

To address the above-mentioned technical challenges, the system 100 introduces a capability to provide a self-supervised domain-agnostic single-image depth estimation for SLI (e.g., monocular imagery) that, for instance, uses machine learning to learn depth features for generating a fused depth map from multiple depth map inputs. The various embodiments of this approach are divided into four sub-approaches to deal with no ground truth data and varying camera intrinsics concerns associated with SLI.
(1) Ground-Truth Data Collection Sub-Approach: In an embodiment of the ground-truth data collection sub-approach, the system 100 can use three ground-truth data collection pipelines. The first pipeline can use the imagery images (e.g., imagery 103) and ground truth depth maps (e.g., ground data 125) that are collected from specialized mapping vehicles, and transform them to the dashcam-based imagery domain. The second pipeline will use an external dataset with urban traffic condition images and respective depth maps, which will be inferred over ensemble state-of-the-art (SOTA) depth-prediction models (e.g., depth prediction models 131a-131i - also collectively referred to as depth prediction models 131) whose respective depth map outputs will be fused by a depth fusion model 133 to generate fused depth map data 135 based on features learned by the depth fusion model 133 during training from each of the respective SOTA depth estimation models 131. The fused depth map data 135 can then be used as ground truth depth maps (ground truth data 125) for the corresponding imagery data 103. This depth fusion model/network 133 is fed back by the available ground truth depth map data to tune its weighted parameters and/or to improve it learned depth features where the input depth maps of the SOTA depth estimation models 131 do not perform well based on the ground truth depth maps (e.g., perform below a designated prediction accuracy threshold). The third pipeline is similar to the second pipeline except that the tuned weighted fusion network/model 133 will operate on dashcam images with no available ground truth as inputs.
(2) Pre-Text Model Training Strategy: For the pre-training, the single-image depth estimation model/network 119 is provided with a masked depth map and tasked with predicting the masked region depth map values for a given input image. This can encourage the single-image depth estimation model/network 119 to learn meaningful representations, handle occlusions effectively, adapt to diverse scenarios, and extract key depth cues, ultimately leading to more reliable and effective depth predictions (e.g., depth estimation data 129) in metric-based depth estimation tasks.
(3) Downstream Model Training Strategy: In one embodiment, the system 100 can use a canonical camera space transformation technique to transform all the training data to common canonical camera space with fixed intrinsic parameters for the camera (e.g., focal length, principal point, etc.), which helps to mitigate the effects of varying camera intrinsics and improves the model's ability to accurately estimate metric depths across different imaging conditions.
(4) Model Inferences Strategy: The dashcam-based images coming from different vendors or data sources, in most cases, have the camera intrinsic provided. For these cases, the system 100 can use this to transform the input images to a canonical space, infer these transformed images to produce the depth maps, and lastly perform the de-canonical transform to convert the image and depth map back to original camera settings. As used herein, a canonical space refers to a space in which images are transformed from their original camera intrinsics to a common set of camera intrinsics so that the images appear as if they were captured using the same optical and/or camera characteristics. For cases where the camera intrinsic is not provided, the system 100 can use a camera parameter estimation algorithm, which estimates the camera intrinsic based on the image features and geometry.

The various embodiments described herein provide for several technical advantages including but not limited:
(1) No Ground Truth Data Required: This various embodiments eliminate the need for expensive and time-consuming ground truth depth map collection.
(2) Domain-Agnostic Learning: This various embodiments include a self-supervised approach that aims to learn features that are relevant for depth prediction regardless of the specific camera sensor used. This can improve the generalization to unseen camera settings.
(3) Potentially Handles Diverse Data: By not relying on a single dataset, the various embodiments provide for a depth estimation model that can be exposed to a wider variety of scenes and camera configurations, thereby improving its ability to handle real-world variations.
(4) Sensor Disparity: By aligning the data to a common reference frame, the canonical camera space transform used in the various embodiments described herein helps mitigate the effects of varying camera intrinsics and improves the model's ability to accurately estimate metric depths across different imaging conditions.

In summary, the various embodiments described herein provide a four approaches to addressing the technical challenges resulting from no ground truth availability, sensor variability, metric ambiguity, and limited data diversity, as discussed above. It is contemplated that the four approaches can be used alone or in any combination. The four approaches are described in further detail below.

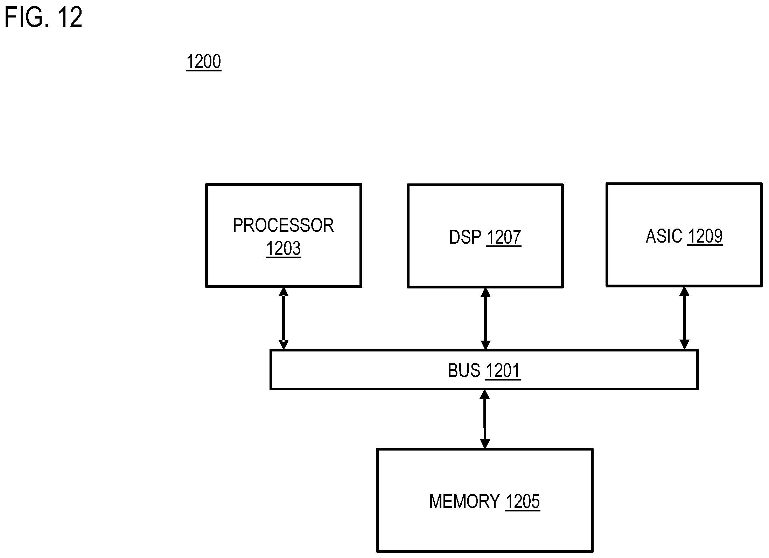

In various embodiments, the mapping platform 115 and/or any equivalent component of the system 100 as shown in FIG. 1 may perform one or more portions of the approaches described herein and may be implemented in, for instance, a chip set including a processor and a memory as shown in FIG. 12. As such, the mapping platform 115 and/or one or more other components of the system 100 can provide means for accomplishing various parts of the processes associated with these approaches, as well as means for accomplishing embodiments of other processes described herein in conjunction with other components of the system 100. Although the various embodiments of the approaches are illustrated and described as a sequence of steps, its contemplated that various embodiments may be performed in any order or combination and need not include all of the illustrated steps.

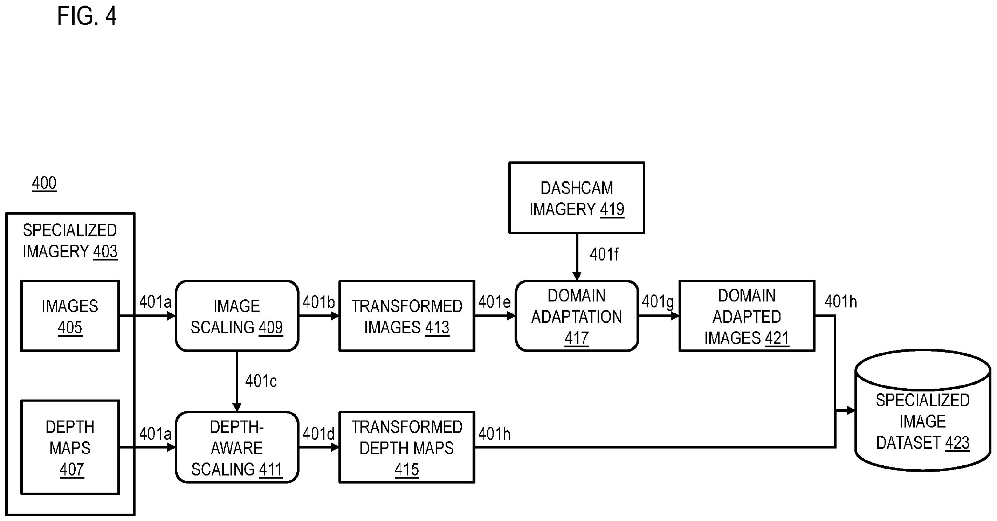

These approaches are directed to solving the technical challenges associated with monocular depth estimation and are described in more detail with respect to FIGs. 4-9. Monocular depth estimation, for instance, refers to determining the distance of objects in a scene using a single camera image, as opposed to using multiple images or sensors.

The first approach relates to ground truth data collection. As previously described, generally with SLI (e.g., crowd-sourced dashcam SLI), the system 100 generally does not have ground truth depth map data corresponding to the collected SLI, making the problem of obtaining ground truth annotations for such imagery more challenging to solve. To address this, the system 100 can employ one or more of three pipelines to collect ground truth depth maps as detailed below.

Approach 1: In one embodiment, the mapping platform 115 can convert imagery that is available from the more limited fleet of specialized mapping vehicles into Dashcam Format. With specialized mapping vehicles, the mapping platform 115 generally has a collection of precise depth maps generated using LiDAR (or equivalent) accompanying imagery captured by specialized mapping vehicles. As previously noted, however, the coverage of this type of imagery from specialized mapping vehicles is generally limited to FC1 and FC2 roads, with sparse coverage if any of FC3-FC5 roads. In addition, the imagery from these specialized mapping vehicles typically have less diversity and are generally of higher quality (e.g., resolution, clarity, etc.) than found in crowd sourced dashcam data. This can potentially limit the generalizability of any model trained on imagery taken only from these fleets of specialized mapping vehicles. In one embodiment, the mapping platform 115 addresses this technical problem by converting the imagery and corresponding ground truth depth maps from specialized mapping vehicles to the dashcam format using domain adaptation techniques such as Fourier domain adaptation (FDA) or histogram matching. Domain adaptation refers to converting the imagery from specialized mapping vehicles to have the same optical quality, scale, field of view, and/or the like as dashcam SLI.

FIG. 4 is a process flow 400 for conversion of images and depth maps collected from specialized mapping vehicles to dashcam format, according to one example embodiment. The process flow 400 comprises processes 401a-401h. At process 401a, a set of specialized imagery 403 (e.g., comprising images 405 - SLI - and respective depth maps 407 collected from specialized mapping vehicles equipped to capture imagery as well as depth information) are provided as inputs to an image scaling block 409 to scale the images 405 to the dashcam imagery format (e.g., equivalent aspect ratio, resolution, color bit-depth, etc.) and a depth-aware scaling block 411 to scale the respective depth maps 407.

For example, at process 401b, the images 405 can be cropped from the top and bottom at a specific aspect ratio to match the dashcam-based image format, resulting in a new transformed image (e.g., transformed images 413).

At process 401c, the scale factor used in the image scaling block 409 can be passed to the depth-aware scaling block 411 (at process 401c).

At process 401d, the depth-aware scaling block 411 uses this scaling factor to generate the transformed depth map 415 for the corresponding transformed image 413. For example, the depth map 407 corresponding to an image 405 can be geometrically transformed (e.g., by cropping and scaling according to the scaling factor) in the same way the image 405 was transformed.

At process 401e, the transformed image 413 is passed through the domain adaptation block 417. In one embodiment, the domain adaptation block is a component that aims to reduce the differences between images from different domains (e.g., from specialized mapping vehicles and from dashcams). It typically receives images from at least two different domains. For example, it might take a transformed image from a specific source and a random image from a more diverse target domain. The goal of the domain adaptation block 417 is align the distributions of the source domain (e.g., imagery from specialized mapping vehicles such as specialized imagery 403) and target domain (e.g., dashcam imagery 419). In other words, the domain adaptation block 417 helps to adapt the source domain data to resemble the target domain data.

Accordingly, at process 401f, the domain adaptation block 417 receives the second input of a random dashcam image from a larger set of diverse dashcam images collected by various vendors (e.g., dashcam imagery 419).

At process 401g, the domain adaptation block 417 uses the transformed image 413 as the source image and the dashcam image (e.g., from dashcam imagery 419) as the target image, and applies techniques such as but not limited to Fourier Domian Adaptation (FDA) or Histogram Matching (HM) to output the domain adapted images 421 where the semantics of the scene is not changed, thus not affecting the corresponding depth map (e.g., transformed depth maps 415).

At process 401h, the domain-adapted images 421 and transformed depth maps 415 are stored in a database (e.g., specialized image dataset 423) for use later in the ground-truth collection pipeline.

In one embodiment of this ground-truth collection pipeline, the mapping platform 115 can use a weighted depth-fusion ML model in which a depth map is generated from various state-of-the-art (SOTA) depth estimation models. These SOTA depth models can be divided into discriminative and generative categories. Discriminative depth estimation models are a family of SOTA models in the field of depth estimation that try to directly predict depth values based on input data, typically using a regression approach. Discriminative models work by trying to predict something known as regression based on input values. In the context of depth estimation, this means they directly output a depth value (e.g., in meters) for each pixel in the input image. Examples of such predicted values are "10 m", "2 m", etc. In contrast, Generative depth estimation models are a family of state-of-the-art models for depth estimation that take a different approach compared to discriminative models. Instead of directly regressing depth values, generative models, particularly diffusion-based models, learn to generate depth maps that are similar to the expected output, often by reversing a process of noise addition. In one embodiment, the various embodiments of the depth fusion model described herein combines the outputs of both types of models to improve prediction accuracy.

In other words, the objective of the weighted-depth fusion model is to obtain the best possible approach based on the both discriminative and generative depth estimation models by learning depth features and/or predicting and assigning weights to various SOTA depth-estimation models to generate a more accurate fused depth map from the individual outputs of each SOTA depth-estimation model.

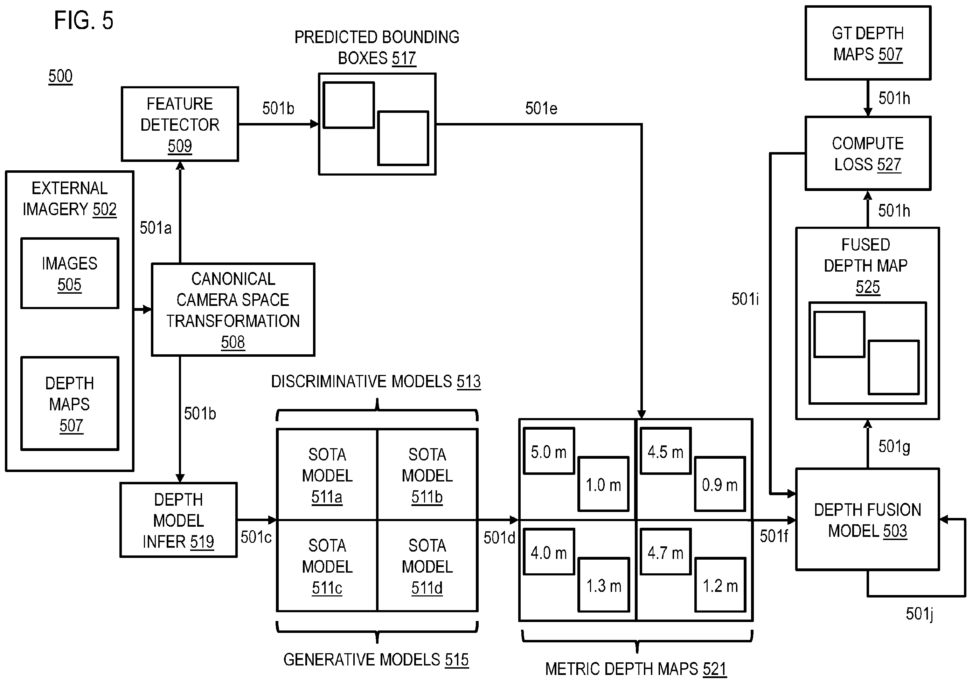

FIG. 5 is a process flow 500 (e.g., comprising processes 501a-501j) for parameter tuning of a depth fusion model 503 for single image depth estimation, according to one example embodiment.

At process 501a, the mapping platform obtains external imagery 502 that comprises images 505 and respective depth maps 507 that were collected from external data sources that have urban traffic conditions. In one embodiment, the external imagery 502 can be processed at the canonical camera space transformation 508 using a canonical camera space transformation technique to transform the external imagery 502 to common canonical camera space with fixed intrinsic parameters for the camera (e.g., focal length, center point, principal point, etc.), which helps to mitigate the effects of varying camera intrinsics and improves the model's ability to accurately estimate metric depths across different imaging conditions. By way of example, a canonical camera space transformation refers to the process of converting images to a standardized or common reference frame with fixed camera parameters. This transformation ensures that all images are viewed under the same intrinsic camera settings, such as a known focal length, center point, and principal point. By doing so, the effects of varying camera intrinsics are mitigated, improving the model's ability to accurately estimate metric depths across different imaging conditions.

Then, the transformed images 505 can be provided as an input to a feature detector 509 (e.g., a road sign/feature detection model such as but not limited to a YOLOv9 pre-trained model), and the transformed depth maps 507 can be provided as input to collection of SOTA depth estimation models 511a-511d (also collectively referred to as SOTA models 511) including one or more discriminative depth estimation models 513 and/or one or more generative depth estimation models 515.

At process 501b, the feature detector 509 (e.g., the YOLOv9 model) predicts the region of interest (ROI) in terms of bounding boxes 517 for various classes of objects/features (e.g., road signs, poles, etc.) captured in the scene of each image 505. Bounding boxes 517 are areas (e.g., rectangular areas) defined by their pixel coordinates (e.g., top-left corner, width, and height) used to localize and identify objects or regions of interest within an image. They serve as a way to draw a tight rectangular boundary around a specific feature in the image. A tight boundary refers to a bounding box 517 or region that closely encompasses an object or feature of interest in an image (e.g., within a threshold number of pixels), minimizing the inclusion of surrounding background or other irrelevant pixels.

At process 501c, the depth model inference block 519 provides the images 505 along with respective camera parameters to the SOTA models 511. In this way, each image 505 is inferred from all SOTA depth-estimation models 511 with the respective camera parameters.

At process 501d, the SOTA models 511 produce respective depth maps (e.g., metric depth maps 521) for the provided images and camera parameters, e.g., resulting in metric depth maps that have a pixel-level meter depth estimation.

At process 501e, the bounding boxes 517 generated at process 501b are provided as inputs to overlay the metric depth maps 521. For example, the bounding boxes can be overlaid on top of these depth maps 521, and using a closed-point technique or equivalent to obtain the distance information in meters for each predicted bounding box 517.

At process 501f, the depth maps 521 with overlaid bounding boxes 517 are provided as input to train the depth fusion model 503. The depth fusion model 503 applies weighted fusion logic, which learns depth features from each SOTA model prediction during training and generates a fused depth map 525 based on the learned depth features to generate direct prediction of the depth fusion model 503. In other words, the fusion process involves learning depth features from the input depth maps of the SOTA models 511 and/or assigning weights to the predictions from each of the input SOTA models. In one embodiment, the fusion process is not a simple linear regression or averaging of the depth maps. Instead, the model (e.g., a transformer-based model) learns these depth features and/or weights through a training process. This allows the model to capture more complex relationships and dependencies between the different input depth maps 521.

In one embodiment, the depth fusion model 503 is transformer encoder network with self-attention mechanism. For example, a transformer encoder network processes input depth maps using its self-attention mechanism. This self-attention allows each depth feature or element in the input to look at all other features and weigh their relevance to predicting a fused depth map and to understand its own meaning within that specific context. By stacking multiple layers of self-attention and feed-forward networks, the encoder progressively builds feature representations for depth elements in the input.

At process 501h, during training of the depth fusion model 503, the loss 527 is calculated using the ground truth (GT) depth map (e.g., depth maps 507 of the external imagery 502) and the predicted fused depth map 525.

At process 501i, this loss 527 is propagated back to the depth fusion model 503 as feedback. In one embodiment, the process of using the loss 527 to update the depth fusion model 503's parameters is backpropagation. During backpropagation, the gradients of the loss 527 with respect to the model's internal parameters (the weights of the network) are calculated. These gradients indicate the direction and magnitude in which each parameter should be adjusted to reduce the loss. For example, backpropagation enables the training to adjust one or more depth features for predicting a fused depth map based on the loss.

At process 501j, the depth fusion model 503 adjusts its model parameters (e.g., model weights and biases) according to the feedback received until a target level of prediction accuracy is achieved. In this way, the training enables the depth fusion model 503 to improve its depth features in places where the input depth maps 521 of the SOTA models 511 do not perform well using the ground truth depth maps (e.g., have prediction accuracy with respect to the ground truth depth maps below a designated threshold accuracy).

After the above process 501j, the depth fusion model 503 is considered to be fine-tuned to perform the weighted fusion of the depth maps provided to it as input, and is ready for inference. This trained depth fusion model 503 can then be used along with the SOTA depth estimation models 511 in discriminative 513 and generative 515 categories to generate pseudo depth maps for unlabeled dashcam imagery for known category camera parameters.

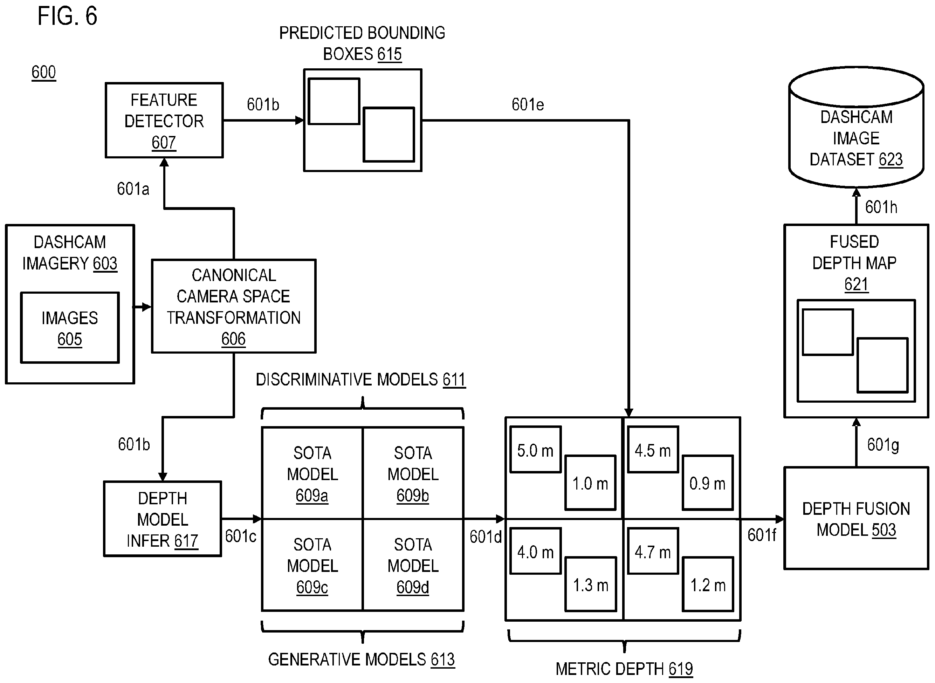

FIG. 6 is a process flow 600 (e.g., comprising processes 601a-601h) for pseudo depth map estimation, according to one example embodiment. In the example of FIG. 6, dashcam imagery 603 (e.g., comprising images 605 from various vendors/sources without any depth maps and with known and unknown camera parameters) is provided as an input to infer over a feature detector 607 (e.g., ML road sign/feature detection model) and a collection of SOTA depth estimation models 609a-609d comprising one or more discriminative models 611 and/or one or more generative models 613. In one embodiment, the dashcam imagery 603 can be processed at the canonical camera space transformation 606 using a canonical camera space transformation technique to transform the external imagery 503 to common canonical camera space with fixed intrinsic parameters for the camera (e.g., focal length, center point, principal point, etc.), which helps to mitigate the effects of varying camera intrinsics and improves the model's ability to accurately estimate metric depths across different imaging conditions.

At process 601a, the feature detector 607 (e.g., YOLOv9 or equivalent) predicts the ROI's (Regions of Interest) in terms of bounding boxes 615 for various classes/features captured in the images 605.

At process 601b, the images 605 are also provided to a depth model inference block 617 for processing. At process 601c, the depth model inference block 617 provides the images 605 along with respective camera parameters (if available) to the SOTA models 609 for inference.

At process 601d, the SOTA models 609 produce depth maps 619 for the provided images 605 and camera parameters, resulting in a metric depth map 619 that has a pixel-level meter depth estimation.

At process 601e, the bounding boxes 615 generated at process 601b are provided as inputs to overlay the metric depth maps 619. Accordingly, the bounding boxes 615 can be overlaid on top of the depth maps 619, and using, e.g., the closed-point technique or equivalent, the distance information in meters for each predicted bounding box 615 is determined.

At process 601f, this information (e.g., the metric depth maps 619 with overlaid bounding boxes 615) is passed to the trained depth fusion model 503, which learned the depth features from each SOTA model prediction and generates a fused depth map 621 (at process 601g).

At process 601h, this fused depth map 621 is stored as a pseudo depth map in a datastore (e.g., dashcam image dataset 623).

Approach 2: Once the mapping platform 115 has completed the data collection strategy phase described in the various embodiments of Approach 1 above, the mapping platform 115 can start with the single-image depth-estimation model training phases. In one embodiment, for greater generalization ability and reduction in dependency on ground truth data, the mapping platform 115 can take a self-supervised approach, where the mapping platform 115 first trains the single-image depth-estimation model to understand robust features and geometric cues (e.g., pre-text model training).

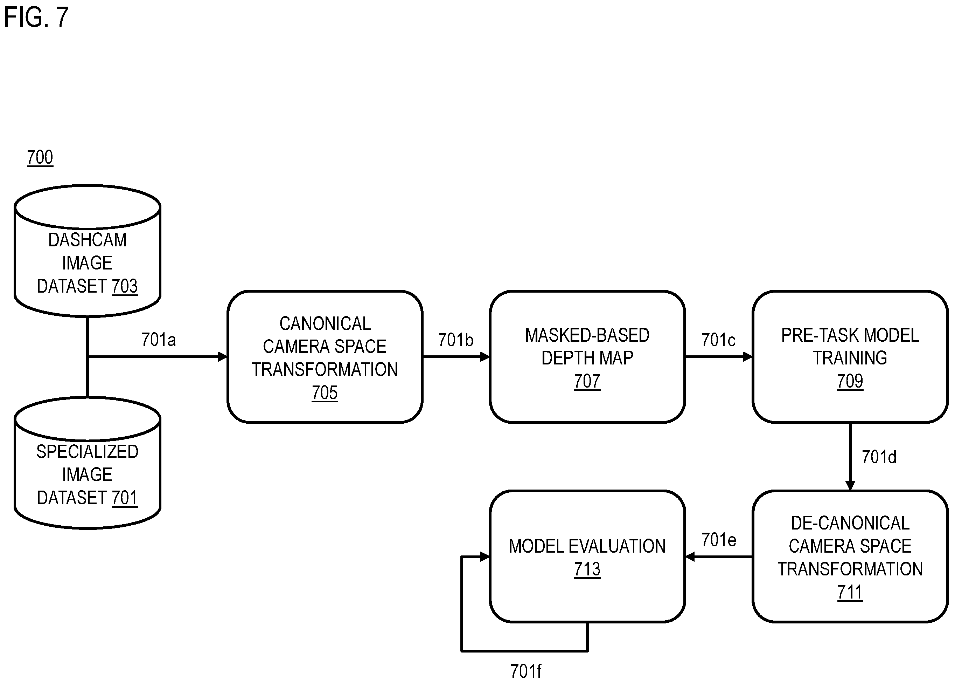

FIG. 7 is a process flow 700 (e.g., comprising processes 701a-701f) for pre-text model training, according to one example embodiment. The mapping platform 115 receives a specialized image dataset 701 and a dashcam image dataset 703, along with their corresponding pseudo depth maps and camera parameters, which were generated using the various embodiments of the data collection approach described above.

At process 701a, these components are then presented as input to the canonical camera space transformation block 705. In one embodiment, the canonical camera space transformation block 705 applies a canonical camera space transformation on these input images to standardize the camera parameters. This transformation, for instance, aligns the input images to a common reference frame with fixed intrinsic parameters, such as focal length and principal point. In some embodiments, the transformation can be an optional process and need not be performed.

At process 701c, the transformed images and depth maps are provided to the masked depth map block 707. In the masked depth map block 707, holes (e.g., masks) are added to the given depth map (e.g., by removing or replacing depth values for a set of pixels in the image), and the single-image depth-estimation model is tasked with predicting the hole depth values.

At process 701c, using these masked depth maps (with holes), the mapping platform 115 begin the pre-text model training 709, where the objective of the network is to predict the masked depth maps in the canonical space. In other words, the single-image depth-estimation model is tasked with predicting the depth values that were removed or replaced from the corresponding depth maps.

At process 701d, a de-canonical camera space transformation 711 is performed on the predicted depth map to convert it back to the original camera space of the input image. This step reverses the transformation applied earlier in canonical camera space transformation block 705.

At process 701e, the mapping platform 115 performs model evaluation 713 on the predicted depth maps and the corresponding ground truth depth maps (e.g., obtained using the ground truth data collection of the various embodiments described above) to generate various metrics. For example, at process 701f, a loss value can be calculated based on the predicted fused depth and ground truth depth maps and used as feedback for backpropagation of the single-image depth-estimation model.

Approach 3: In one embodiment, after completing the pre-training task, the single-image depth-estimation model now has a good understanding of the features and geometric cues associated depth estimation on SLI. This learned representation by the network will now be used for downstream tasks in supervised learning environments. In one embodiment, the learning can be based on cut-depth augmentation with canonical camera space transformation technique.

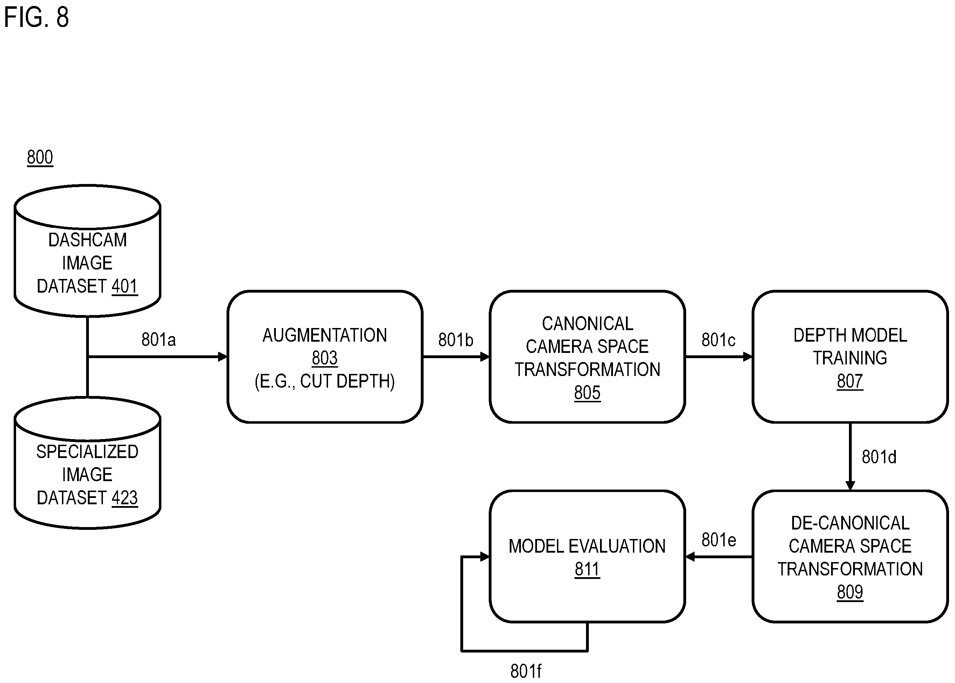

FIG. 8 is a process flow 800 (e.g., comprising processes 801a-801f) for downstream model training, according to one example embodiment. In one embodiment, at process 801a dashcam imagery with pseudo generated ground truth depth map data (e.g., dashcam image dataset 623) and/or imagery collected from specialized mapping vehicles that has been transformed (e.g., specialized image dataset 423) are provided as inputs to the augmentation block 803 (e.g., configured to perform CutDepth augmentation or equivalent). In CutDepth augmentation, a random portion of raw image pixels (e.g., a vertical strip of pixels, or any other designated set of pixels) is replaced with the depth map values at the same pixels, and a new augmented image is generated.

At process 801b, the mapping platform 115 applies a canonical camera space transformation 805 on these augmented input images to standardize the camera parameters. This transformation, for instance, aligns the image to a common reference frame with fixed intrinsic parameters, such as focal length and principal point.

At process 801c, the transformed and augmented images, and corresponding ground truth depth maps are provided for training of the single-image depth-estimation model (e.g., depth model training 807). The training of the model on these canonical transformed images and depth maps is performed with the objective of refining the predicted depth map using available ground truth depth information.

At process 801d, a de-canonical camera space transformation 809 is performed on the predicted depth map to convert it back to the original camera space of the input image. This step reverses the canonical camera space transformation 805 applied earlier.

At process 801e, the mapping platform 115 performs model evaluation 713 on the predicted depth maps and the corresponding ground truth depth maps (e.g., obtained using the ground truth data collection of the various embodiments described above) to generate various metrics. For example, at process 801f, a loss value can be calculated based on the predicted fused depth and ground truth depth maps and used as feedback for backpropagation of the single-image depth-estimation model.

Approach 4: The mapping platform 115 now has a trained single-image depth-estimation model, which can be used for model inferences over the dashcam images coming from various vendors with different sets of camera parameters and without any ground truth depth maps.

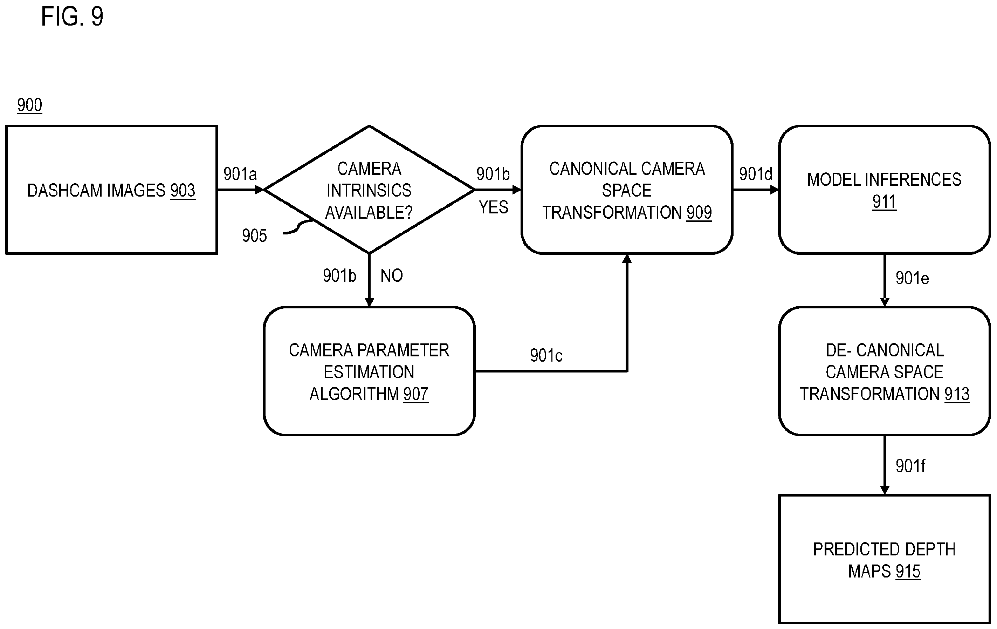

FIG. 9 is a process flow 900 (e.g., comprising processes 901a-901f) for model inference, according to one example embodiment. At process 901a, dashcam drive images 903 (e.g., without ground truth depth map data) can be provided as input to the camera-check condition block 905.

At process 901b, if camera parameters are available, they are forwarded directly to the canonical camera space transformation block 909. If camera parameters (e.g., focal length, principal point, etc.) are not available, they are redirected to the camera parameter estimation algorithm block 907.

At process 901c, for cases where there are no camera parameters, the mapping platform 115 attempts to estimate those parameters based on the provided input images and past camera parameters for images with similar properties.

At canonical camera space transformation block 909, the mapping platform applies a canonical camera space transformation on these input images to standardize the camera parameters. This transformation aligns the image to a common reference frame with fixed intrinsic parameters, such as focal length and principal point.

At process 901d, model inferences 911 are performed on these canonical transformed images that predict metric depth maps using the trained single-image depth-estimation model. In other words, the input to the single-image depth-estimation model is a transformed dashcam image, and the output is a predicted depth map with depth values for each pixel of the input image.

At process 901e, a de-canonical camera space transformation 913 is performed on the predicted depth map to convert it back to the original camera space of the input image. This step reverses the canonical camera space transformation 909 applied earlier.

At process 901f, the transformed predicted depth map 915 is obtained as an output.

Thus, the various approaches described herein solve the monocular metric depth estimation problem for SLI even for varying and unknown camera intrinsics.

In summary, at process flow 500, the mapping platform 115 processes first training imagery (e.g., external imagery 502) using a plurality of depth-estimation models (e.g., SOTA models 511) to generate a first plurality of predicted depth maps (e.g., predicted depth maps 521). The first training imagery (e.g., external imagery 502) is associated with first ground truth data comprising a plurality of ground truth depth maps (e.g., ground truth depth maps 507). The mapping platform 115 initiates a training (e.g., processes 501i and 501j) of a depth fusion model (e.g., depth fusion model 503) to learn depth features that are to be used to predict the fused depth map.

At process flow 600, the mapping platform 115 then processes second training imagery (e.g., dashcam imagery 603) using the plurality of depth-estimation models (e.g., SOTA depth-estimation models 613) to generate a second plurality of predicted depth maps (e.g., predicted depth maps 619). The mapping platform 115 processes the second plurality of predicted depth maps (e.g., predicted depth maps 619) using the trained depth fusion model (e.g., depth fusion model 503) to learn depth features to predict the fused depth map (e.g., fused depth map 621). The mapping platform 115 then stores the fused depth map (e.g., fused depth map 621) as ground truth data for the second training imagery (e.g., in dashcam image dataset 623).

In one embodiment, the loss (e.g., loss 527) for the training is calculated using the fused depth map (e.g., fused depth map 525) and the first plurality of ground truth depth maps (e.g., ground truth depth maps 507). Backpropagation based on this loss enables the depth fusion model 503 to learn "good" depth features for generating the fused depth map 525. In the context of machine learning and depth map prediction, "good" depth features are those features of input depth maps that correlate or otherwise result in increases prediction accuracy of the fused depth 525 with respect to the ground truth depth maps 507 (e.g., features that minimize loss). In other words, training of the depth fusion model 503 adjusts or learns the one or more depth features based on the loss, and the resulting trained depth fusion model 503 have effectively learned which depth features result in achieving target prediction accuracy of the fused depth map 525.

Returning to FIG. 1, as shown, the system 100 comprises one or more vehicles 107 and/or one or more UEs 111 that act as probes traveling over a road network to capture SLI. Although the vehicles 107 are depicted as automobiles, it is contemplated that the vehicles 107 can be any type of transportation vehicle, manned or unmanned (e.g., planes, aerial drone vehicles, motorcycles, boats, bicycles, etc.), and the UE 111 can be associated with any of the types of vehicles or a person or thing (e.g., a pedestrian) traveling within a transportation or road network. In one embodiment, each vehicle 107 and/or UE 111 is assigned a unique probe identifier (probe ID) for use in reporting or transmitting probe data and/or SLI collected by the vehicles 107 and UE 111. The vehicles 107 and UE 111, for instance, are part of a probe-based system for collecting probe data for monitoring a road network. In one embodiment, each vehicle 107 and/or UE 111 is configured to report probe data as probe points, which are individual data records collected at a point in time that records telemetry data for that point in time. The probe points and/or SLI can be reported from the vehicles 107 and/or UEs 111 in real-time, in batches, continuously, or at any other frequency requested by the system 100 over, for instance, the communication network 119 for processing by the mapping platform 115.

In one embodiment, the mapping platform 115 performs the processes for providing single-image depth-estimation according to various embodiments described herein. By way of example, the mapping platform 115 can be a standalone server or a component of another device with connectivity to the communication network 119. For example, the component can be part of an edge computing network where remote computing devices (not shown) are installed along or within proximity of a transportation network to provide depth estimation.

In one embodiment, the vehicles 107 and/or UE 111 may execute an application to present or use the results of depth estimation generated by the mapping platform 115 according to the embodiments described herein. For example, if the application is a navigation application, then the depth estimation results can be used to determine positioning information, routing information, and the like.

By way of example, the UE 111 is any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the UE 111 can support any type of interface to the user (such as "wearable" circuitry, etc.). In one embodiment, the UE 111 may be associated with a vehicle 107 (e.g., cars), a component part of the vehicle 107, a mobile device (e.g., phone), and/or a combination of thereof. Similarly, the vehicle 107 may include computing components that can perform all or a portion of the functions of the UE 111.

By way of example, the application may be any type of application that is executable at the vehicle 107 and/or the UE 111, such as mapping applications, location-based service applications, navigation applications, content provisioning services, camera/imaging application, media player applications, social networking applications, calendar applications, and the like. In one embodiment, the application may act as a client for the mapping platform 115 and perform one or more functions of the mapping platform 115 alone or in combination with the platform 115.

In one embodiment, the vehicles 107 and/or the UE 111 are configured with various sensors for generating SLI and/or related probe data. By way of example, the sensors for generating SLI and/or probe data may include a global positioning sensor for gathering location data (e.g., GPS), Light Detection And Ranging (LIDAR) for gathering distance data and/or generating depth maps, infrared sensors for thermal imagery, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture obstruction for analysis and documentation purposes), an audio recorder for gathering audio data, velocity sensors mounted on steering wheels of the vehicles, switch sensors for determining whether one or more vehicle switches are engaged, and the like.

In another embodiment, the sensors of the vehicles 107 and/or UE 111 may include light sensors, orientation sensors augmented with height sensors and acceleration sensor (e.g., an accelerometer can measure acceleration and can be used to determine orientation of the vehicle), tilt sensors to detect the degree of incline or decline of the vehicle along a path of travel, moisture sensors, pressure sensors, etc. In a further example embodiment, sensors about the perimeter of the vehicle may detect the relative distance of the vehicle from lane or roadways, the presence of other vehicles, pedestrians, traffic lights, potholes and any other objects, or a combination thereof. In one scenario, the sensors may detect weather data, traffic information, or a combination thereof. In one example embodiment, the vehicles 107 and/or UE 111 may include GNSS receivers (e.g. GPS, Galileo, GLONASS or receivers) to obtain geographic coordinates from satellites for determining current location and time associated with the vehicle 107 and/or UE 111 for generating probe data. Further, the location can be determined by a triangulation system such as A-GPS, Cell of Origin, or other location extrapolation technologies.

The communication network 119 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

The services platform 121 may include any type of service 123. By way of example, the services 123 may include mapping services, navigation services, travel planning services, notification services, social networking services, content (e.g., audio, video, images, etc.) provisioning services, application services, storage services, contextual information determination services, location-based services, information based services (e.g., weather, news, etc.), etc. In one embodiment, the services platform 121 may interact with the mapping platform 115, the vehicle 107, the UE 111, and/or one or more content providers 117 to provide the services 123.

In one embodiment, the content providers 117 may provide content or data to the vehicles 107 and/or UEs 111, the mapping platform 115, and/or the services 123. The content provided may be any type of content, such as SLI, mapping content, textual content, audio content, video content, image content, etc. In one embodiment, the content providers 117 may provide content that may aid in the various embodiment of path-based map matching described herein. In one embodiment, the content providers 117 may also store content associated with the vehicles 107, the UE 111, the mapping platform 115, and/or the services 123. In another embodiment, the content providers 117 may manage access to a central repository of data, and offer a consistent, standard interface to data, such as a repository of probe data, probe features/attributes, link features/attributes, etc. Any known or still developing methods, techniques or processes for retrieving and/or accessing feature values for probe points and/or road links from one or more sources may be employed by the mapping platform 115.

By way of example, the vehicles 107, the UEs 111, the mapping platform 115, the services platform 121, and/or the content providers 117 communicate with each other and other components of the system 100 using well known, new or still developing protocols. In this context, a protocol includes a set of rules defining how the network nodes within the communication network 119 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

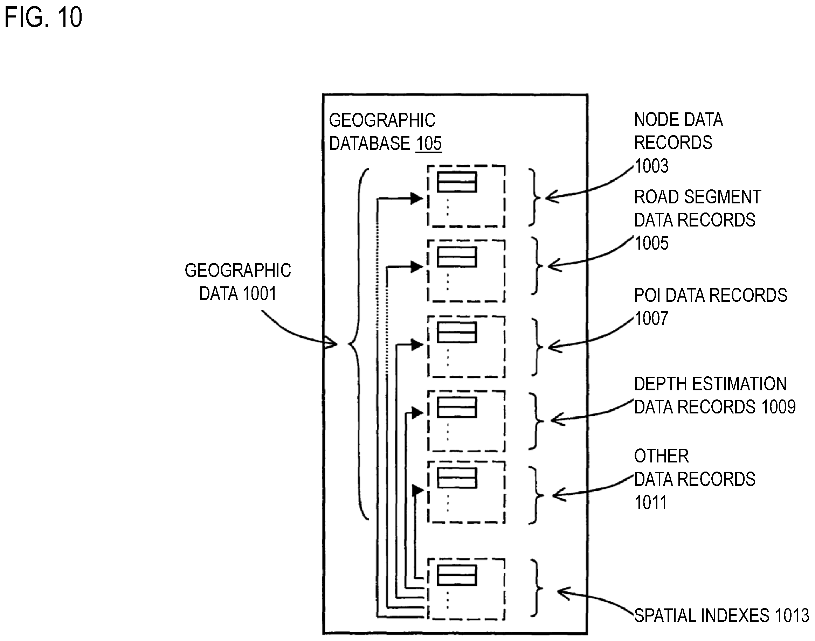

FIG. 10 is a diagram of a geographic database 105, according to one embodiment. In one embodiment, the geographic database 105 includes geographic data 1001 used for (or configured to be compiled to be used for) mapping and/or navigation-related services. In one embodiment, the geographic database 105 include high resolution or high definition (HD) mapping data that provide centimeter-level or better accuracy of map features. For example, the geographic database 105 can be based on Light Detection and Ranging (LiDAR) or equivalent technology to collect billions of 3D points and model road surfaces and other map features down to the number lanes and their widths. In one embodiment, the HD mapping data (e.g., HD data records 1011) capture and store details such as the slope and curvature of the road, lane markings, roadside objects such as sign posts, including what the signage denotes. By way of example, the HD mapping data enable highly automated vehicles to precisely localize themselves on the road, and to determine map data updates (e.g., learned speed limit values) to at high accuracy levels.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 105.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 105 follows certain conventions. For example, links do not cross themselves and do not cross each other except at a node. Also, there are no duplicated shape points, nodes, or links. Two links that connect each other have a common node. In the geographic database 105, overlapping geographic features are represented by overlapping polygons. When polygons overlap, the boundary of one polygon crosses the boundary of the other polygon. In the geographic database 105, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

In one embodiment, the geographic database 105 is stored as a hierarchical or multilevel tile-based projection or structure. More specifically, in one embodiment, the geographic database 105 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid in order to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

As shown, the geographic database 105 includes node data records 1003, road segment or link data records 1005, POI data records 1007, depth estimation data records 1009, HD mapping data records 1011, and indexes 1013, for example. More, fewer, or different data records can be provided. In one embodiment, additional data records (not shown) can include cartographic ("carto") data records, routing data, and maneuver data. In one embodiment, the indexes 1013 may improve the speed of data retrieval operations in the geographic database 105. In one embodiment, the indexes 1013 may be used to quickly locate data without having to search every row in the geographic database 105 every time it is accessed. For example, in one embodiment, the indexes 1013 can be a spatial index of the polygon points associated with stored feature polygons.

In exemplary embodiments, the road segment data records 1005 are links or segments representing roads, streets, or paths, as can be used in the calculated route or recorded route information for determination of one or more personalized routes. The node data records 1003 are end points corresponding to the respective links or segments of the road segment data records 1005. The road link data records 1005 and the node data records 1003 represent a road network, such as used by vehicles, cars, and/or other entities. Alternatively, the geographic database 105 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 105 can include data about the POIs and their respective locations in the POI data records 1007. The geographic database 105 can also include data about places, such as cities, towns, or other communities, and other geographic features, such as bodies of water, mountain ranges, etc. Such place or feature data can be part of the POI data records 1007 or can be associated with POIs or POI data records 1007 (such as a data point used for displaying or representing a position of a city).

In one embodiment, the geographic database 105 includes depth estimation data records 1009 which store SLI data, depth maps, training data, and/or related information. For example, the map matching data records 1009 can store collected SLI data for train a machine depth estimation and related ML models.

In one embodiment, as discussed above, the HD mapping data records 1011 model road surfaces and other map features to centimeter-level or better accuracy. The HD mapping data records 1011 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the HD mapping data records 1011 are divided into spatial partitions of varying sizes to provide HD mapping data to vehicles 107 and other end user devices with near real-time speed without overloading the available resources of the vehicles 107 and/or devices (e.g., computational, memory, bandwidth, etc. resources).

In one embodiment, the HD mapping data records 1011 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 1011.

In one embodiment, the HD mapping data records 1011 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 105 can be maintained by the content provider 117 in association with the services platform 121 (e.g., a map developer). The map developer can collect geographic data to generate and enhance the geographic database 105. There can be different ways used by the map developer to collect data. These ways can include obtaining data from other sources, such as municipalities or respective geographic authorities. In addition, the map developer can employ field personnel to travel by vehicle (e.g., vehicle 107 and/or user device 109) along roads throughout the geographic region to observe features and/or record information about them, for example. Also, remote sensing, such as aerial or satellite photography, can be used.

The geographic database 105 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by a vehicle 107 or user device 109. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing single-image depth-estimation may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

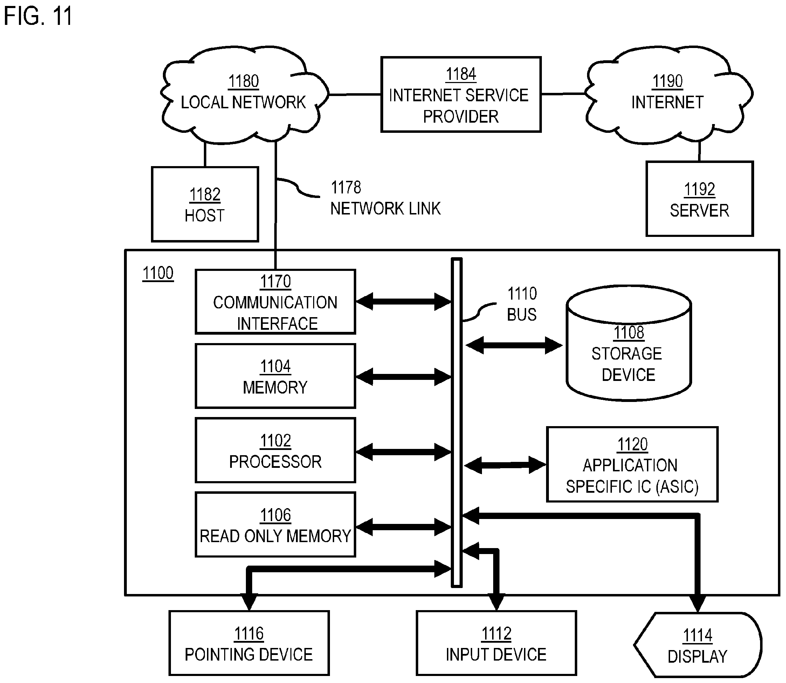

FIG. 11 illustrates a computer system 1100 upon which an embodiment of the invention may be implemented. Computer system 1100 is programmed (e.g., via computer program code or instructions) to provide single-image depth-estimation as described herein and includes a communication mechanism such as a bus 1110 for passing information between other internal and external components of the computer system 1100. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1110 includes one or more parallel conductors of information so that information is transferred quickly among devices coupled to the bus 1110. One or more processors 1102 for processing information are coupled with the bus 1110.

A processor 1102 performs a set of operations on information as specified by computer program code related to providing single-image depth-estimation. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1110 and placing information on the bus 1110. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1102, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1100 also includes a memory 1104 coupled to bus 1110. The memory 1104, such as a random access memory (RAM) or other dynamic storage device, stores information including processor instructions for providing single-image depth-estimation. Dynamic memory allows information stored therein to be changed by the computer system 1100. RAM allows a unit of information stored at a location called a memory address to be stored and retrieved independently of information at neighboring addresses. The memory 1104 is also used by the processor 1102 to store temporary values during execution of processor instructions. The computer system 1100 also includes a read only memory (ROM) 1106 or other static storage device coupled to the bus 1110 for storing static information, including instructions, that is not changed by the computer system 1100. Some memory is composed of volatile storage that loses the information stored thereon when power is lost. Also coupled to bus 1110 is a non-volatile (persistent) storage device 1108, such as a magnetic disk, optical disk or flash card, for storing information, including instructions, that persists even when the computer system 1100 is turned off or otherwise loses power.

Information, including instructions for providing single-image depth-estimation, is provided to the bus 1110 for use by the processor from an external input device 1112, such as a keyboard containing alphanumeric keys operated by a human user, or a sensor. A sensor detects conditions in its vicinity and transforms those detections into physical expression compatible with the measurable phenomenon used to represent information in computer system 1100. Other external devices coupled to bus 1110, used primarily for interacting with humans, include a display device 1114, such as a cathode ray tube (CRT) or a liquid crystal display (LCD), or plasma screen or printer for presenting text or images, and a pointing device 1116, such as a mouse or a trackball or cursor direction keys, or motion sensor, for controlling a position of a small cursor image presented on the display 1114 and issuing commands associated with graphical elements presented on the display 1114. In some embodiments, for example, in embodiments in which the computer system 1100 performs all functions automatically without human input, one or more of external input device 1112, display device 1114 and pointing device 1116 is omitted.

In the illustrated embodiment, special purpose hardware, such as an application specific integrated circuit (ASIC) 1120, is coupled to bus 1110. The special purpose hardware is configured to perform operations not performed by processor 1102 quickly enough for special purposes. Examples of application specific ICs include graphics accelerator cards for generating images for display 1114, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1100 also includes one or more instances of a communications interface 1170 coupled to bus 1110. Communication interface 1170 provides a one-way or two-way communication coupling to a variety of external devices that operate with their own processors, such as printers, scanners and external disks. In general the coupling is with a network link 1178 that is connected to a local network 1180 to which a variety of external devices with their own processors are connected. For example, communication interface 1170 may be a parallel port or a serial port or a universal serial bus (USB) port on a personal computer. In some embodiments, communications interface 1170 is an integrated services digital network (ISDN) card or a digital subscriber line (DSL) card or a telephone modem that provides an information communication connection to a corresponding type of telephone line. In some embodiments, a communication interface 1170 is a cable modem that converts signals on bus 1110 into signals for a communication connection over a coaxial cable or into optical signals for a communication connection over a fiber optic cable. As another example, communications interface 1170 may be a local area network (LAN) card to provide a data communication connection to a compatible LAN, such as Ethernet. Wireless links may also be implemented. For wireless links, the communications interface 1170 sends or receives or both sends and receives electrical, acoustic or electromagnetic signals, including infrared and optical signals, that carry information streams, such as digital data. For example, in wireless handheld devices, such as mobile telephones like cell phones, the communications interface 1170 includes a radio band electromagnetic transmitter and receiver called a radio transceiver. In certain embodiments, the communications interface 1170 enables connection to the communication network 119 for providing single-image depth-estimation.

The term computer-readable medium is used herein to refer to any medium that participates in providing information to processor 1102, including instructions for execution. Such a medium may take many forms, including, but not limited to, non-volatile media, volatile media and transmission media. Non-volatile media include, for example, optical or magnetic disks, such as storage device 1108. Volatile media include, for example, dynamic memory 1104. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1178 typically provides information communication using transmission media through one or more networks to other devices that use or process the information. For example, network link 1178 may provide a connection through local network 1180 to a host computer 1182 or to equipment 1184 operated by an Internet Service Provider (ISP). ISP equipment 1184 in turn provides data communication services through the public, world-wide packet-switching communication network of networks now commonly referred to as the Internet 1190.

A computer called a server host 1192 connected to the Internet hosts a process that provides a service in response to information received over the Internet. For example, server host 1192 hosts a process that provides information representing video data for presentation at display 1114. It is contemplated that the components of system can be deployed in various configurations within other computer systems, e.g., host 1182 and server 1192.

FIG. 12 illustrates a chip set 1200 upon which an embodiment of the invention may be implemented. Chip set 1200 is programmed to provide single-image depth-estimation as described herein and includes, for instance, the processor and memory components described with respect to FIG. 11 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1200 includes a communication mechanism such as a bus 1201 for passing information among the components of the chip set 1200. A processor 1203 has connectivity to the bus 1201 to execute instructions and process information stored in, for example, a memory 1205. The processor 1203 may include one or more processing cores with each core configured to perform independently. A multi-core processor enables multiprocessing within a single physical package. Examples of a multi-core processor include two, four, eight, or greater numbers of processing cores. Alternatively or in addition, the processor 1203 may include one or more microprocessors configured in tandem via the bus 1201 to enable independent execution of instructions, pipelining, and multithreading. The processor 1203 may also be accompanied with one or more specialized components to perform certain processing functions and tasks such as one or more digital signal processors (DSP) 1207, or one or more application-specific integrated circuits (ASIC) 1209. A DSP 1207 typically is configured to process real-world signals (e.g., sound) in real time independently of the processor 1203. Similarly, an ASIC 1209 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1203 and accompanying components have connectivity to the memory 1205 via the bus 1201. The memory 1205 includes both dynamic memory (e.g., RAM, magnetic disk, writable optical disk, etc.) and static memory (e.g., ROM, CD-ROM, etc.) for storing executable instructions that when executed perform the inventive steps described herein to provide single-image depth-estimation. The memory 1205 also stores the data associated with or generated by the execution of the inventive steps.

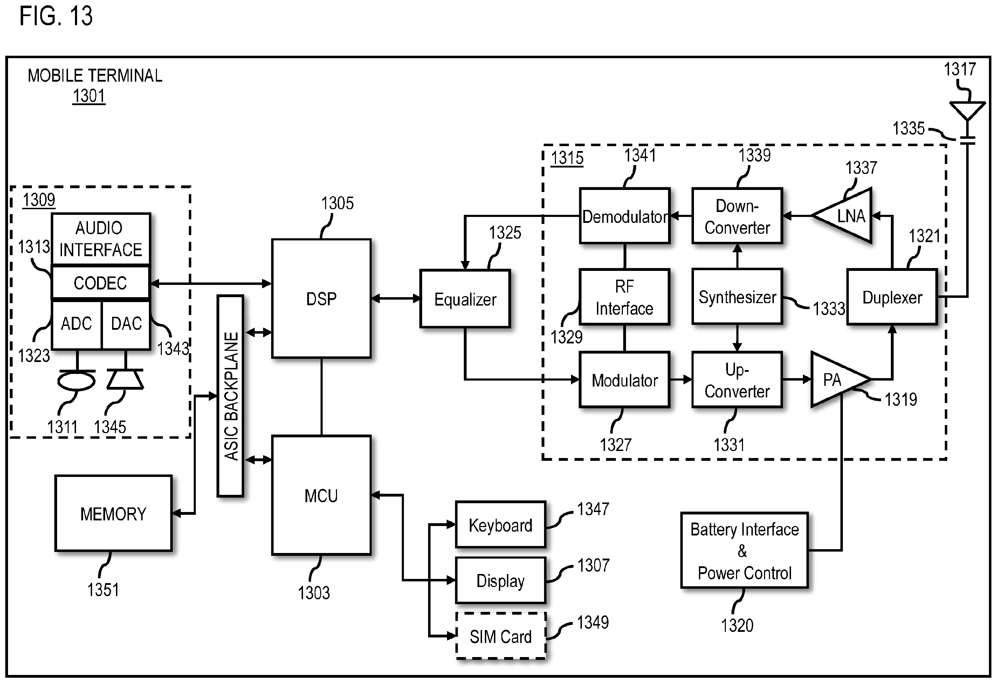

FIG. 13 is a diagram of exemplary components of a mobile terminal (e.g., UE 111, vehicle 107, or component thereof) capable of operating in the system of FIG. 1, according to one embodiment. Generally, a radio receiver is often defined in terms of front-end and back-end characteristics. The front end of the receiver encompasses all of the Radio Frequency (RF) circuitry whereas the back end encompasses all of the base-band processing circuitry. Pertinent internal components of the telephone include a Main Control Unit (MCU) 1303, a Digital Signal Processor (DSP) 1305, and a receiver/transmitter unit including a microphone gain control unit and a speaker gain control unit. A main display unit 1307 provides a display to the user in support of various applications and mobile station functions that offer automatic contact matching. An audio function circuitry 1309 includes a microphone 1311 and microphone amplifier that amplifies the speech signal output from the microphone 1311. The amplified speech signal output from the microphone 1311 is fed to a coder/decoder (CODEC) 1313.

A radio section 1315 amplifies power and converts frequency in order to communicate with a base station, which is included in a mobile communication system, via antenna 1317. The power amplifier (PA) 1319 and the transmitter/modulation circuitry are operationally responsive to the MCU 1303, with an output from the PA 1319 coupled to the duplexer 1321 or circulator or antenna switch, as known in the art. The PA 1319 also couples to a battery interface and power control unit 1320.

In use, a user of mobile station 1301 speaks into the microphone 1311 and his or her voice along with any detected background noise is converted into an analog voltage. The analog voltage is then converted into a digital signal through the Analog to Digital Converter (ADC) 1323. The control unit 1303 routes the digital signal into the DSP 1305 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1325 for compensation of any frequency-dependent impairments that occur during transmission though the air such as phase and amplitude distortion. After equalizing the bit stream, the modulator 1327 combines the signal with a RF signal generated in the RF interface 1329. The modulator 1327 generates a sine wave by way of frequency or phase modulation. In order to prepare the signal for transmission, an up-converter 1331 combines the sine wave output from the modulator 1327 with another sine wave generated by a synthesizer 1333 to achieve the desired frequency of transmission. The signal is then sent through a PA 1319 to increase the signal to an appropriate power level. In practical systems, the PA 1319 acts as a variable gain amplifier whose gain is controlled by the DSP 1305 from information received from a network base station. The signal is then filtered within the duplexer 1321 and optionally sent to an antenna coupler 1335 to match impedances to provide maximum power transfer. Finally, the signal is transmitted via antenna 1317 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1301 are received via antenna 1317 and immediately amplified by a low noise amplifier (LNA) 1337. A down-converter 1339 lowers the carrier frequency while the demodulator 1341 strips away the RF leaving only a digital bit stream. The signal then goes through the equalizer 1325 and is processed by the DSP 1305. A Digital to Analog Converter (DAC) 1343 converts the signal and the resulting output is transmitted to the user through the speaker 1345, all under control of a Main Control Unit (MCU) 1303-which can be implemented as a Central Processing Unit (CPU) (not shown).

The MCU 1303 receives various signals including input signals from the keyboard 1347. The keyboard 1347 and/or the MCU 1303 in combination with other user input components (e.g., the microphone 1311) comprise a user interface circuitry for managing user input. The MCU 1303 runs a user interface software to facilitate user control of at least some functions of the mobile station 1301 to provide single-image depth-estimation. The MCU 1303 also delivers a display command and a switch command to the display 1307 and to the speech output switching controller, respectively. Further, the MCU 1303 exchanges information with the DSP 1305 and can access an optionally incorporated SIM card 1349 and a memory 1351. In addition, the MCU 1303 executes various control functions required of the station. The DSP 1305 may, depending upon the implementation, perform any of a variety of conventional digital processing functions on the voice signals. Additionally, DSP 1305 determines the background noise level of the local environment from the signals detected by microphone 1311 and sets the gain of microphone 1311 to a level selected to compensate for the natural tendency of the user of the mobile station 1301.

The CODEC 1313 includes the ADC 1323 and DAC 1343. The memory 1351 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1351 may be, but not limited to, a single memory, CD, DVD, ROM, RAM, EEPROM, optical storage, or any other non-volatile or non-transitory storage medium capable of storing digital data.

An optionally incorporated SIM card 1349 carries, for instance, important information, such as the cellular phone number, the carrier supplying service, subscription details, and security information. The SIM card 1349 serves primarily to identify the mobile station 1301 on a radio network. The card 1349 also contains a memory for storing a personal telephone number registry, text messages, and user specific mobile station settings.

The following exemplary embodiments are also disclosed:
Embodiment 1: A computer-implemented method comprising: processing first training imagery using a plurality of depth-estimation models to generate a first plurality of predicted depth maps, wherein the first training imagery is associated with first ground truth data comprising a plurality of ground truth depth maps; initiating a training of a depth fusion model to learn one or more depth features from an input comprising the first plurality of predicted depth maps and to predict a fused depth map based on the input, wherein the depth fusion model is based on transformer encoder network with a self-attention mechanism, wherein a loss for the training is calculated using the fused depth map and the first plurality of ground truth depth maps, and wherein the training adjusts the one or more depth features based on the loss; processing second training imagery using the plurality of depth-estimation models to generate a second plurality of predicted depth maps; processing the second plurality of predicted depth maps using the trained depth fusion model to generate the fused depth map; and storing the fused depth map as ground truth data for the second training imagery.
Embodiment 2: The method of embodiment 1, wherein the depth fusion model is trained to predict the one or more depth features for the plurality of depth-estimations models.
Embodiment 3: The method of embodiment 2, wherein the one or more depth features is used for for generating the fused depth map.
Embodiment 4: The method of embodiment 1, further comprising: initiating a training of a single-image depth-estimation model based on the second training imagery and the ground truth data.
Embodiment 5: The method of embodiment 4, further comprising:
   applying a canonical camera space transformation to the second training imagery or other imagery processed by the depth fusion model, wherein the canonical camera space transformation transforms the second training imagery or the other imagery to a fixed focal length.
Embodiment 6: The method of embodiment 5, wherein the canonical camera space transformation is performed before, after, or a combination thereof using the trained sign-image depth-estimation model for inference.
Embodiment 7: The method of embodiment 4, wherein the training of the single-image depth-estimation model comprises: masking at least one depth map of the second ground truth data by adding one or more holes to the at least one depth map; and tasking the single-image depth-estimation model to predict one or more depth values for the one or more holes.
Embodiment 8: The method of embodiment 4, further comprising: applying a cut-depth augmentation on the second training imagery by randomly replacing one or more depth values for at least one portion of the second ground truth training data prior to training.
Embodiment 9: The method of embodiment 1, further comprising: processing reference imagery associated with a plurality of reference depth maps to generate the first ground truth data.
Embodiment 10: The method of embodiment 9, wherein the processing of the reference imagery comprises a Fourier domain adaptation, a histogram matching, or a combination thereof.
Embodiment 11: The method of embodiment 9, wherein the processing of the reference imagery comprises a depth-aware scaling.
Embodiment 12: The method of embodiment 1, wherein the plurality of depth-estimation models comprise at least one discrimination model and at least one generative model.
Embodiment 13: The method of embodiment 1, wherein the one or more depth features are determined by object class captured in the first training imagery.
Embodiment 14: An apparatus comprising: at least one processor; and at least one memory including computer program code for one or more programs, the at least one memory and the computer program code configured to, with the at least one processor, cause the apparatus to perform at least the following, process first training imagery using a plurality of depth-estimation models to generate a first plurality of predicted depth maps, wherein the first training imagery is associated with first ground truth data comprising a plurality of ground truth depth maps; initiate a training of a depth fusion model to learn one or more depth features from an input comprising the first plurality of predicted depth maps and to predict a fused depth map based on the input, wherein the depth fusion model is based on transformer encoder network with a self-attention mechanism, wherein a loss for the training is calculated using the fused depth map and the first plurality of ground truth depth maps, and wherein the training adjusts the one or more depth features based on the loss; process second training imagery using the plurality of depth-estimation models to generate a second plurality of predicted depth maps; process the second plurality of predicted depth maps using the trained depth fusion model to generate the fused depth map; and store the fused depth map as ground truth data for the second training imagery.
Embodiment 15: The apparatus of embodiment 14, wherein the apparatus is further caused to: initiate a training of a single-image depth-estimation model based on the second training imagery and the ground truth data.
Embodiment 16: The apparatus of embodiment 15, wherein the apparatus is further caused to: apply a canonical camera space transformation to the second training imagery or other imagery processed by the depth fusion model, wherein the canonical camera space transformation transforms the second training imagery or the other imagery to a fixed focal length.
Embodiment 17: The apparatus of embodiment 15, wherein the training of the single-image depth-estimation model causes the apparatus to: mask at least one depth map of the second ground truth data by adding one or more holes to the at least one depth map; and task the single-image depth-estimation model to predict one or more depth values for the one or more holes.
Embodiment 18: A non-transitory computer-readable storage medium, carrying one or more sequences of one or more instructions which, when executed by one or more processors, cause an apparatus to at least perform the following steps: processing first training imagery using a plurality of depth-estimation models to generate a first plurality of predicted depth maps, wherein the first training imagery is associated with first ground truth data comprising a plurality of ground truth depth maps; initiating a training of a depth fusion model to learn one or more depth features from an input comprising the first plurality of predicted depth maps and to predict a fused depth map based on the input, wherein the depth fusion model is based on transformer encoder network with a self-attention mechanism, wherein a loss for the training is calculated using the fused depth map and the first plurality of ground truth depth maps, and wherein the training adjusts the one or more depth features based on the loss; processing second training imagery using the plurality of depth-estimation models to generate a second plurality of predicted depth maps; processing the second plurality of predicted depth maps using the trained depth fusion model to generate the fused depth map; and storing the fused depth map as ground truth data for the second training imagery.
Embodiment 19: The non-transitory computer-readable storage medium of embodiment 17, wherein the apparatus is caused to further perform: initiating a training of a single-image depth-estimation model based on the second training imagery and the ground truth data.
Embodiment 20: The non-transitory computer-readable storage medium of embodiment 19, wherein the apparatus is caused to further perform: applying a canonical camera space transformation to the second training imagery or other imagery processed by depth fusion model, wherein the canonical camera space transformation transforms the second training imagery or the other imagery to fixed focal length.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A computer-implemented method comprising:
processing first training imagery using a plurality of depth-estimation models to generate a first plurality of predicted depth maps, wherein the first training imagery is associated with first ground truth data comprising a plurality of ground truth depth maps;
initiating a training of a depth fusion model to learn one or more depth features from an input comprising the first plurality of predicted depth maps and to predict a fused depth map based on the input, wherein the depth fusion model is based on transformer encoder network with a self-attention mechanism, wherein a loss for the training is calculated using the fused depth map and the first plurality of ground truth depth maps, and wherein the training adjusts the one or more depth features based on the loss;
processing second training imagery using the plurality of depth-estimation models to generate a second plurality of predicted depth maps;
processing the second plurality of predicted depth maps using the trained depth fusion model to generate the fused depth map; and
storing the fused depth map as ground truth data for the second training imagery.

2. The computer-implemented method of claim 1, wherein the depth fusion model is trained to predict the one or more depth features for the plurality of depth-estimations models.

3. The computer-implemented method of claim 2, wherein the one or more depth features is used for generating the fused depth map.

4. The computer-implemented method of any one of claims 1 to 3, further comprising:
initiating a training of a single-image depth-estimation model based on the second training imagery and the ground truth data.

5. The computer-implemented method of claim 4, further comprising:
applying a canonical camera space transformation to the second training imagery or other imagery processed by the depth fusion model,
wherein the canonical camera space transformation transforms the second training imagery or the other imagery to a fixed focal length.

6. The computer-implemented method of claim 5, wherein the canonical camera space transformation is performed before, after, or a combination thereof using the trained sign-image depth-estimation model for inference.

7. The computer-implemented method of any one of claims 4 to 6, wherein the training of the single-image depth-estimation model comprises:
masking at least one depth map of the second ground truth data by adding one or more holes to the at least one depth map; and
tasking the single-image depth-estimation model to predict one or more depth values for the one or more holes.

8. The computer-implemented method of any one of claims 4 to 6, further comprising:
applying a cut-depth augmentation on the second training imagery by randomly replacing one or more depth values for at least one portion of the second ground truth training data prior to training.

9. The computer-implemented method of any one of claims 1 to 8, further comprising:
processing reference imagery associated with a plurality of reference depth maps to generate the first ground truth data.

10. The computer-implemented method of any one of claims 1 to 9, wherein the plurality of depth-estimation models comprise at least one discrimination model and at least one generative model.

11. The computer-implemented method of any one of claims 1 to 10, wherein the one or more depth features are determined by object class captured in the first training imagery.

12. An apparatus comprising means configured for performing the computer-implemented method according to any of claims 1 to 11.

13. The apparatus of claim 12, wherein said means comprise at least one processor; and at least one memory including computer program code for one or more programs, the at least one memory and the computer program code configured to, with the at least one processor, cause the apparatus to perform the computer-implemented method according to any of claims 1 to 11.

14. A computer program comprising sequences of one or more instructions which, when executed by one or more processors, cause an apparatus to at least perform the computer-implemented method according to any of claims 1 to 11.

15. The computer program of claim 14, wherein the computer program is stored on a non-transitory computer-readable storage medium.
